(19) Europäisches Patentamt
European Patent Office
Office européen des brevets

(11) Publication number: **0 005 082**
**B1**

(12) **EUROPEAN PATENT SPECIFICATION**

(45) Date of publication of patent specification: **12.05.82**

(51) Int. Cl.³: **A 24 B 15/20**, C 02 F 3/28, C 12 P 3/00

(21) Application number: **79300706.3**

(22) Date of filing: **25.04.79**

(54) **Microbial nitrate removal from tobacco materials by dissimilatory denitrification.**

(30) Priority: **25.04.78 US 900044**

(43) Date of publication of application:
**31.10.79 Bulletin 79/22**

(45) Publication of the grant of the patent:
**12.05.82 Bulletin 82/19**

(84) Designated Contracting States:
**BE CH DE FR GB IT NL**

(56) References cited:
**DE - A - 2 634 188**
**FR - A - 821 729**
**FR - A - 2 154 411**
**FR - A - 2 389 341**
**FR - A - 2 389 342**

**CHEMICAL ABSTRACTS, vol. 89, no. 8, 21—8, 1978, abstract 64652j Columbus, Ohio, USA HIGASHINO F. et al. "Improved biological denitrification". column 1, page 302.**

(73) Proprietor: **PHILIP MORRIS INCORPORATED**
**100 Park Avenue**
**New York, New York 10017 (US)**

(72) Inventor: **Semp, Bernard Albert**
**4133 Dorset Court**
**Richmond Virginia 23234 (US)**
Inventor: **Teng, Daniel Ming-Yi**
**7638 Redbud Road**
**Richmond Virginia 23235 (US)**

(74) Representative: **Bass, John Henton et al,**
**REDDIE & GROSE 16 Theobalds Road**
**London WC1X 8PL (GB)**

**EP 0 005 082 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Microbial nitrate removal from tobacco materials by dissimilatory denitrification

## Technical field

The present invention pertains to a process for reducing certain nitrogen-containing compounds present in tobacco materials. More specifically, the present invention provides a process for treating tobacco materials by subjecting them to the action of microorganisms whereby nitrate and the subsequent metabolic intermediates are substantially reduced and removed, thereby reducing the total nitrogen content of the tobacco product. Smoking articles prepared from the treated tobacco products deliver significantly lowered amounts of oxides of nitrogen on smoking.

## Background of prior art

It is generally recognized that smoking products having a lowered amount of oxides of nitrogen present in the smoke are desirable. Several techniques have been suggested for reducing oxides of nitrogen in smoking articles. US Patents 3,616,801 and 3,847,164 relate generally to reconstituted tobacco and methods wherein ion exchange, ion retardation resins, or electrodialysis techniques are utilized to selectively remove inorganic constituents from aqueous tobacco extracts. The methods disclosed relate generally to the removal of nitrate-containing compounds from tobacco. These particular methods may be feasible on a small scale but are apt to be both expensive and impractical on a commercial scale. In addition, the methods described appear to be limited to reconstituted tobacco methodology and are not particularly suitable for treating other forms of tobacco such as leaf or filler. Moreover, regeneration of the ion exchange resin or disposal of the resin containing the crude nitrate-containing compounds adds to the cost and also presents a problem from an ecological and environmental viewpoint.

More recently, a process for recovering crystalline potassium nitrate from tobacco extracts has been described in U.S. patents nos. 4131117 and 4131118. Concentrated tobacco extracts are cooled to effect crystallization of potassium nitrate which is then removed by centrifugation. The partially denitrated tobacco extract containing about 0.3 to 0.5% nitrate is then recombined with a fibrous tobacco web as in making reconstituted tobacco. The crystalline potassium nitrate by-product may be used for agricultural purposes.

An additional method for removing certain agents from tobacco is disclosed in U.S. Patent 3,995,646 and involves placing the tobacco in heated liquid for a preselected time period. The wash solution containing tobacco solubles is presumably discarded. The washed tobacco is dried and then rehydrated to restore the tobacco to a condition suitable for use in cigarettes. This process suffers certain disadvantages in that subjecting higher grades of tobacco such as prime leaf or filler to washing in hot or boiling water results in an undesirably high loss of tobacco solubles and flavorants. Moreover, disposal of the tobacco solubles solution presents a problem from an environmental viewpoint.

Tso et al. in US Patent 3,845,774 describe tobacco treatment methods referred to as homogenized leaf curing wherein the tobacco is homogenized and incubated under well defined and controlled conditions. Nitrate-nitrogen and total nitrogen are reduced somewhat; however, the amount of reduction is not as significant as that of the present process. Tso et al. alludes to the fact that tobacco modification can be accomplished by the use of additional techniques during homogenization and incubation, such as enzyme and microbial action; however, no specific methods or means for reducing nitrate-nitrogen are suggested.

W. O. Atkinson et al. reported a reduction in nitrate-nitrogen in homogenized tobacco leaf curing wherein the tobacco was extracted with aqueous-ethyl alcohol prior to incubation (Proceedings of the University of Kentucky Tobacco and Health Research Institute, Lexington, Kentucky, Conference Report 4, March 1973, p. 829—33). The use of aqueous-ethyl alcohol for extraction purposes results in the loss of desirable tobacco flavorants thereby rendering this method undesirable for our purposes.

The use of microorganisms is known in the art of fermenting tobacco, especially tobaccos suitable for use in cigars and the like. Microorganisms have been used to produce milder tobaccos and to modify certain types of tobacco flavorants. More recently, US Patent 4,037,609 and DE—A—26 34 188 disclosed methods for reducing the nicotine content of tobacco by microbial treatment using microorganisms obtained from cigar tobacco. Aerobic fermentation techniques are employed wherein nicotine is degraded via microbial action to 3-succinoylpyridine. Although one of the organisms referred to (Cellulomonas sp.) is capable of reducing nitrate to nitrite, with some formation of nitrogen gas, it is not used for this purpose in the process described and it does not appear that such reduction occurs under the conditions employed. In FR—A—2 154 411 Erwinia sp. are employed to digest pectin bound plant material including tobacco. Once again, some of the organisms are capable of reducing nitrate to nitrite, but are not employed for that purpose. Moreover, residual nitrite in smoking materials can cause similar problems to nitrate.

## Summary of the invention

In accordance with the present invention, tobacco material extracts or effluents are subjected to microbial action of microorganisms capable of reducing nitrate-nitrogen by dissimilatory denitrification

to elementary nitrogen, which is removed as a gas, the process being carried out anaerobically on sterilized materials. Nitrate removal is accompanied by the concomitant reduction of the total nitrogen content of the treated materials. The process is specific for nitrate, leaving the cation concentration, i.e., $K^+$, $Na^+$, etc., unchanged. Nitrogen gas which is evolved can be reused for sparging gas, thus eliminating troublesome disposal problems experienced in prior methods of nitrate removal. The process does not require unduly expensive equipment and is not energy intensive. Moreover, the process is adaptable to all types of tobacco materials, such as leaf, stems, shredded filler, and aqueous tobacco extracts, whereas the known methods are generally applicable to tobacco that is ultimately utilized in reconstituted tobacco sheets. The dissimilatory reduction of nitrate-nitrogen gas follows a series of enzymatic reactions shown schematically below.

$$NO_3^- \rightarrow NO_2^- \rightarrow NO \rightarrow N_2O \rightarrow N_2$$

Dissimilatory denitrification is preferred in that the end product of nitrate metabolism, nitrogen gas, is evolved from the reaction mixture, thereby leaving no other nitrogenous-containing metabolic intermediate products that could potentially affect the subjective characteristics of the denitrated tobacco material, or influence the further formation of oxides of nitrogen in the generated smoke.

The process of the present invention may be utilized for the denitrification of tobacco components, aqueous tobacco extracts, or waste streams containing tobacco solubles having nitrate salts. Optimum denitrification is observed when the nitrate-nitrogen level is at least 10 ppm and generally no greater than about 3000 ppm.

The process described in this invention is particularly suitable for the treatment of burley tobacco which has a relatively high nitrate level as compared to other tobacco types such as bright. Moreover, the process of the present invention may be utilized in combination with other known methods for denitrification of tobacco materials to achieve substantial total nitrate-nitrogen removal from tobacco materials.

Detailed description of the invention

Certain organisms are known to reduce nitrate to elemental nitrogen via a series of anaerobic metabolic steps that are generally referred to as dissimilatory denitrification. Alternatively, some organisms are known to reduce nitrate to ammonia with intermediate products such as nitrite and hydroxylamine. This is generally known as assimilatory nitrate reduction. For the purpose of the present invention, dissimilatory reduction is preferred in that elemental nitrogen is the end by-product of nitrate reduction and is completely removed from the tobacco materials substrate.

Organisms which are effective in dissimilatory reduction of nitrates include *Micrococcus denitrificans* Beijerinck, NC1B8944→*Paracoccus denitrificans*, ATCC 19367; R. Y. Stainier *Paracoccus denitrificans*, ATCC 17741; and NRC 449 Mary T. Clement→*Paracoccus denitrificans*, ATCC 13543. Other dissimilatory denitrifiers are selected species of the Genera Pseudomonas, Alcaligenes, Bacillus and Propionibacterium. The *Paracoccus denitrificans* strain ATCC 19367 utilized in the present process was obtained from the American Type Culture Collection, 12301 Park Lawn Drive, Rockville, Maryland 20852. Organisms effective only in the reduction of nitrate to nitrite in tobacco materials are not considered suitable for use in the present process in that the total oxides of nitrogen content in the smoke from treated tobacco materials is not significantly reduced.

Table 1
Morphological and Biochemical Characteristics of *Paracoccus (Micrococcus) denitrificans* ATCC 19367

A. Morphology

Cells are coccoid, averaging about 1$\mu$ in diameter. They are gram negative and occur in pairs, singly, and aggregates.

Agar Colonies: Circular, entire, smooth, glistening, white, opaque.

B. Physiology

Optimum growth: 25—30°C, Range: 5—37°C.

Nitrates and nitrites are electron acceptors in dissimilation being reduced to nitrous oxide and nitrogen.

Anaerobic growth with the production of gas in the presence of nitrate.

Indole not produced.

Urease activity-negative.

Catalase-positive.

Aerobic growth on salicin, dulcitol, d-xylose, adonitol, lactose, mannitol, sucrose, sorbital, maltose, dextrose, mannose, raffinose and rhamnose but with the production of neither acid or gas.

Aerobic growth fructose, and arabinose with the production of trace amounts of acid.
No growth on aesculin or arginine.
Starch is not hydrolyzed.
Gelatin is not hydrolyzed.

Prior to treating tobacco materials containing nitrate-nitrogen, it is necessary to obtain an inoculum build-up of microorganisms. Inoculum build-up is achieved under controlled anaerobic conditions. Growth and maintenance of the microorganisms may be carried out either in a nitrate broth or a broth derived from aqueous tobacco extracts containing nitrate-nitrogen. Normally the broth should have a nitrate-nitrogen content of at least 10 ppm and preferably about 1400 ppm to support and achieve the desired amount of inoculum build-up. Concentrations of nitrate-nitrogen greater than about 3000 ppm may have adverse effects on the microorganisms.

Inoculum is added to a broth containing nitrate in a shake flask adapted for anaerobic conditions. The dissolved oxygen content should be maintained at no more than about 3 ppm. This is achieved by intermittent sparging, generally at a rate of 0.5 to 1.0 liter/minute with a gas such as nitrogen, helium, or carbon dioxide. The initial pH of the broth should be between about 6 and 8 and preferably between 6.8 and 7.2. The broth is maintained at a temperature between about 20°C and 40°C with temperatures between 30°C and 35°C being preferred. Agitation is generally achieved by low to medium speed stirring at about 60 to 300 rpm.

It will be recognized by those skilled in the art that the amount of culture added to the nitrate broth is a matter of judgment. However, we have found that by adding inoculum to culture broth to give an initial optical density of about 0.3 to 0.4 at 660 $m\mu$ as determined using an Hitachi-Perkin Elmer Spectrophotometer, Model 120, results in an acceptable inoculum build up within a time range of about 8 to 24 hours.

Tobacco materials suitable for use in the present process may be in various forms such as leaf, shredded filler, rolled, crushed or shredded stems, tobacco fines, or aqueous extracts of the above components. Semi-solid fermentation techniques may be utilized in the case of some of the tobacco components listed above. The tobacco components may be mixed with water to give a slurry having concentrations in the range of about 5 to 4% solids by weight.

Optimum denitrification of the tobacco slurry is generally achieved in the range of about 5—20% solids by weight. Alternatively, an aqueous tobacco extract may be prepared containing nitrate-nitrogen in the range of 10 ppm to no greater than about 3000 ppm. Partially denitrated extracts, such as those obtained by the denitration-crystallization process as disclosed in U.S. Patents 4131117 and 4131118, are highly suitable for use in the present process. Such partially denitrated extracts will generally have a nitrate-nitrogen content of about 0.3 to 0.5% prior to treatment according to the process of the present invention.

The tobacco slurry thus prepared, is added to a fermentor such as, for example, a "Labline" rotary drum fermentor. Suitable nutrients and buffering salts, such as $FeCl_3$, $K_2HPO_4$, $MgSO_4 \cdot 7H_2O$, $NH_4Cl$, and glucose are added, and the slurry is sterilized at 15 psi for about 45 minutes.

After cooling, the sterile material is inoculated with at least 10% V/V of inoculum. The inoculum obtained from the inocula build-up step previously described should have an optical density of about 0.5 to 1.5 and preferably about 1.0. Alternatively, the tobacco mixture is inoculated with inoculum from a tobacco extract broth to give viable counts of at least about $1 \times 10^7$ cells per milliliter. The amount of inoculum added to the tobacco will, to a great extent, determine the time necessary to reduce the nitrate-nitrogen present. Larger amounts of inoculum than those indicated above may be used without adversely affecting the tobacco. When the process is used in connection with commercial processing of tobacco, it may be desirable to increase the amount of inoculum added in order to minimize processing time. Generally, processing times required to totally reduce the nitrate-nitrogen will be in the range of about 12 to 72 hours. Of course, shorter periods may be used to achieve a lesser degree of denitrification.

During the fermentation of the tobacco slurry or extract, the temperature is maintained at about 30°C to 40°C and preferably at about 35°C. The dissolved oxygen content is controlled at 0—3 ppm with intermittent sparging at a rate of about 0.5 to 1.0 liter/minute with a suitable sparging gas. Agitation at no less than about 60 rpm is employed. During the fermentation, the pH is recorded and maintained in the range of about 6.0 to 8.0 and optimally between about 6.8 and 7.2.

The rate of denitrification may be assessed by asceptically sampling the mixture periodically and measuring the nitrate content using a specific nitrate ion electrode such as an Orion Model 93-07 nitrate ion electrode. When denitrification is complete, the tobacco material is dried to a suitable moisture content for further tobacco processing. In the case of tobacco extracts, it may be desirable to concentrate the extract prior to reapplication to a fibrous tobacco web as in making reconstituted tobacco. The denitrified tobacco materials or reconstituted tobacco may then be further treated by the addition of suitable casings, flavorants, and the like and then dried and utilized in the production of smoking products.

The process of the present invention is adaptable to treating a variety of forms of tobacco in various stages of curing. For example, the process is highly suitable for use in treating uncured

tobaccos, particularly burley tobacco wherein homogenized leaf curing processes are employed. Moreover, the process may be used to advantage with cured tobaccos in strip form, stems, shreds or tobacco fines, or in tobacco extracts suitable for subsequent use in making reconstituted tobacco. The process is also adaptable for use in denitrifying tobacco effluent streams resulting from routine tobacco processing operations. The effluent stream may be diverted to suitable reservoirs for denitrification treatment prior to discharging in the usual manner, thereby eliminating ecological problems and potential pollution.

The present invention may be illustrated by the following examples of presently preferred practices which demonstrate the effectiveness of the treatment of tobacco materials with microorganisms capable of effecting dissimilatory denitrification.

Example 1

A. Preparation of maintenance agar slopes

Maintenance slopes were prepared according to the following formulation:

| | |
|---|---|
| Glucose | 10.0 g |
| Peptone | 10.0 g |
| $MgSO_4 \cdot 7H_2O$ | 0.5 g |
| $FeCl_3$ | 0.002 g |
| $K_2HPO_4$ | 1.0 g |
| $KNO_3$ | 10.0 g |
| Agar | 15 g |
| Distilled or deionized water | To make 1 liter |

The mixture was boiled for one minute, dispensed in tubes and sterilized at 15 psi for 15 minutes.

*Paracoccus denitrificans* (ATCC 19367) was streaked on the storage agar prepared above. The agar was maintained at 33±2°C for 48 hours. The resultant slopes were stored no longer than 21 days at 0—5°C.

B. Preparation of nitrate broth

Nitrate broth was prepared according to the following formulation:

| | |
|---|---|
| $KH_2PO_4$ | 5.2 g |
| $K_2HPO_4$ | 10.7 g |
| $MgSO_4 \cdot 7H_2O$ | 0.2 g |
| $NH_4Cl$ | 1.0 g |
| $FeCl_3$ | 0.002 g |
| Glucose | 10.0 g |
| $KNO_3$ | 10.0 g |
| Water | to make 1 liter |

The medium was sterilized in an autoclave at 15 psi for 15 minutes and cooled prior to inoculation.

C. Tobacco extract broth

A tobacco extract broth containing soluble burley tobacco components was prepared according to the following procedure. One hundred grams of burley tobacco strip was extracted with 1 liter of distilled water at 0—5°C for 24 hours. After expressing through 4 layers of cheesecloth, the following nutrients were added to the tobacco extract:

| | |
|---|---|
| $KH_2PO_4$ | 5.2 g |
| $K_2HPO_4$ | 10.7 g |
| $MgSO_4 \cdot 7H_2O$ | 0.2 g |
| $NH_4Cl$ | 1.0 g |
| $FeCl_3$ | 0.002 g |
| Glucose | 10.0 g |
| Water | To make 1 liter |

The final broth should contain between 100—2500 ppm nitrate-nitrogen. Following sterilization in an autoclave at 15 psi for 15 minutes, the pH was adjusted to 7.0 using sterile 2N KOH.

D. Inoculum build-up

*Paracoccus denitrificans* cells from 48-hour old agar slants prepared in Step A, were transferred into 250 ml of sterile *nitrate broth* (Step B) in a 1 liter fermentation flask. The mixture was sparged with nitrogen and maintained at 35°C for 24 hours with rotary agitation at 60 rpm. The resultant culture was used to inoculate fresh nitrate or tobacco extract broth. Transfers in this manner were repeated at least five times.

After the fifth transfer, cells were harvested by centrifugation and resuspended in nitrate broth. This culture was then used to inoculate 10 liters of nitrate broth to give an initial concentration of approximately $1 \times 10^7$ cells per milliliter. The fermentor used was a New Brunswick Scientific Company, Modular Microferm Bench Top Fermentor-Series MF-114 equipped with a pH recorder-controller and dissolved oxygen recorder-controller. The starting dissolved oxygen (DO) was 5 ppm; neither nitrogen gas nor air were sparged during the fermentation. The DO was totally depleted in the first 15 minutes. After approximately 24 hours, 95% of the nitrate was reduced. Total nitrogen content was also reduced. The nitrate-nitrogen content was determined using a Technicon Autoanalyzer II system with a modification of the procedure as published by L. F. Kamphake et al., *International Journal of Air and Water Pollution, 1*, 205—216, 1976. Total nitrogen content was determined by Kjeldahl digestion using a Technicon Block Digestor followed by an Autoanalyzer readout of ammonia by the Berthelot reaction. Fermentation conditions and results are shown below.

Fermentation conditions

Time: 24 hours.
Temperature: 35°C±0.2°C.
pH: 7.0—7.2 maintained by automated acid-base additions using sterile 2N KOH or 2M acetic acid
Agitation: 100 rpm
Inoculum: $1 \times 10^7$ cells per milliliter—initial concentration
DO: initial of 5 ppm; no control of DO was used.

Table 2

| Results | 0 Time | 24 Hours |
|---|---|---|
| $NO_3^-$-N (ppm) | 1416 | 78 |
| Total-N (mg/ml) | 1.06 | 0.15 |
| Glucose (mg/ml) | 11.0 | 3.7 |

Example 2

A tobacco extract containing 2600 ppm soluble nitrate-nitrogen was placed in a MF 114 Microferm fermentor (New Brunswick Scientific Company) equipped with pH and dissolved oxygen monitors and controllers. To the extract were added on a g/l basis, 1.0 g $NH_4Cl$, 0.2 g $MgSO_4 \cdot 7H_2O$, 10 g glucose, 0.002 g $FeCl_3$, 10.7 g $K_2HPO_4$, and 5.2 g $KH_2PO_4$. The mixture was sterilized at 15 psi for 45 minutes, cooled, and inoculated with *Paracoccus denitrificans* as prepared in Example 1(D). The initial concentration of microorganisms was approximately $1 \times 10^7$ cells per milliliter.

Fermentation conditions

Temperature: 35°C
Initial pH: 7.0
pH: 6.8—7.2 controlled with either sterile 2N KOH or 2M acetic acid
Agitation: 200 rpm
DO: 0.—0.5 ppm
Sparge: $N_2$ gas controlled by DO moniter and controller
Time: 72 hours

Analytical results are tabulated in Table 3.

Table 3

| Tobacco Extract | $NO_3^-$-N (ppm) | $NO_2^-$-N (ppm) | Total-N (ppm) |
|---|---|---|---|
| 0 Time | 2600 | N.D.* | 4800 |
| 72 Hours | <10 | N.D. | 2200 |

*Not detectable

Example 3

In a similar manner to Example 2, a tobacco extract was prepared having a nitrate-nitrogen content of 1800 ppm. Following addition of the buffering salts and nutrients as in Example 2, the mixture was sterilized and inoculated with a suspension of *Paracoccus denitrificans* grown in a nitrate broth as described in Example 1(D) to give an initial concentration of approximately $3\times10^7$ cells per milliliter. Fermentation conditions were identical to Example 2. The results are tabulated in Table 4 below.

Table 4

| Tobacco Extract | $NO_3^-$-N (ppm) | $NO_2^-$-N (ppm) | Total-N (ppm) |
|---|---|---|---|
| 0 Time | 1800 | N.D. | 3820 |
| 24 Hours | <10 | N.D. | 2000 |

Example 4

In a similar manner to Example 2, a tobacco extract was prepared having a nitrate-nitrogen content of 2000 ppm. Following addition of the buffering salts and nutrients as in Example 2, the mixture was sterilized and inoculated with a suspension of *Paracoccus denitrificans* grown in a nitrate broth as described in Example 1(D) to give an initial concentration of about $3\times10^7$ cells per milliliter.

Fermentation conditions

Temperature: 35°C
Initial pH: 7.0
pH: 6.8—7.2 controlled with either sterile 2N KOH or 2M acetic acid
Agitation: 300 rpm
DO: 0—0.5 ppm
Sparge: Helium gas sparged at 200 ml/minute (continuously)
Time: 24 hours

The results are tabulated in Table 5 below.

Table 5

| Time | $NO_3^-$-N (ppm) | $NO_2^-$-N (ppm) | Total-N (ppm) |
|---|---|---|---|
| 0 Time | 2000 | N.D. | 3700 |
| 24 Hours | <10 | N.D. | 1800 |

Example 5

Burley tobacco components including (1) filler, (2) stems, (3) strip, and (4) fines were placed in individual flasks. Nutrients and buffering salts were added in the following amounts based on a total final volume of 1 liter: 10.7 g $K_2HPO_4$, 5.2 g $KH_2PO_4$; 0.002 g $FeCl_3$; 0.2 g $MgSO_4\cdot7H_2O$, 1.0 g $NH_4Cl$, and 10.0 g glucose. Following sterilization for 45 minutes at 15 psi, the contents of each flask were inoculated with *Paracoccus denitrificans* broth as prepared in Example 1 to give an initial concentration of about $3\times10^7$ cells per milliliter.

Fermentation conditions

Temperature: 35°C
Initial pH: 7.0
Agitation: 60 rpm
DO: ≤0.5 ppm
Sparge: $N_2$ gas—intermittent
Time: 24 hours

The results are tabulated in Tables 6, 7, and 8.

Table 6

| | | $NO_3^-$-N (mg/g tobacco) | % $NO_3^-$-N Reduction |
|---|---|---|---|
| Stem 5% (W/V) | 0 Time | 38.5 | — |
| | 24 Hours | N.D. | 100 |
| Fines 5% (W/V) | 0 Time | 38.5 | — |
| | 24 Hours | N.D. | 100 |

Table 7

| | | Total-N (mg/g tobacco) | $NO_3^-$-N (mg/g tobacco) | $NO_2^-$-N (mg/g) |
|---|---|---|---|---|
| Tobacco Filler 10% (W/V) | 0 Time | 40.4 | 19.3 | N.D. |
| | 24 Hours | 23.4 | N.D. | N.D. |
| Strip 10% (W/V) | 0 Time | 40.4 | 17.9 | N.D. |
| | 24 Hours | 21.6 | N.D. | N.D. |

Table 8

| | | $NO_3^-$-N (mg/g tobacco) | % $NO_3^-$-N Reduction |
|---|---|---|---|
| Tobacco Filler 20% (W/V) | 0 Time | 19.55 | — |
| | 24 Hours | 14.38 | 26.5 |
| | 48 Hours | 0 | 100 |
| Strip 20% (W/V) | 0 Time | 21.28 | — |
| | 24 Hours | 7.94 | 62.7 |
| | 48 Hours | 0 | 100 |

Example 6

An aqueous effluent sample containing 1360 ppm nitrate-nitrogen was adjusted to pH 7.0 with 2M $K_2HPO_4$ and 2N KOH. Two hundred and fifty milliliter aliquots of the buffered effluent samples were placed in two 1-liter flasks. Into one flask was added 0.25 g $NH_4Cl$, 0.05 g $MgSO_4 \cdot 7H_2O$, 0.0005 g $FeCl_3$, and 2.5 g glucose. No nutrients were added to the other flask.

Both flasks were autoclaved at 15 psi for 45 minutes, cooled, and inoculated with *Paracoccus denitrificans* to give an initial concentration of about $1 \times 10^7$ cells per milliliter. The flasks were sparged for five minutes with oxygen scrubbed nitrogen gas, and then placed in a rotary shaking water bath. The flasks were agitated at 80 rpm for 16 hours at 35°C. The results are tabulated in Table 9 below.

Table 9

| | | $NO_3^-$-N (ppm) | % $NO_3^-$-N Reduction |
|---|---|---|---|
| Buffer only | 0 Time | 1360 | 76.4% |
| | 16 Hours | 320 | |
| Complete system | 0 Time | 1360 | |
| | 16 Hours | <1 | ≃100% |

## Claims

1. A process for the reduction of nitrate-nitrogen in tobacco materials, extracts or processing effluents by subjecting the tobacco material, extract or effluent to the action of microorganisms capable of reducing nitrates, characterized in that the material, extract or effluent is sterilized and then subjected under substantially anaerobic conditions to the action of a microorganism capable of reducing nitrate-nitrogen by dissimilatory denitrification to form elemental nitrogen as the end-product, which is removed as a gas.

2. A process according to claim 1 characterized in that the tobacco material, extract or effluent is maintained in contact with the microorganisms for a period of 12 to 72 hours, at a temperature of 20°C to 40°C, a pH within the approximate range from 6 to 8, and a dissolved oxygen content of no more than 3 ppm.

3. A process according to claim 1 or 2, characterized in that the tobacco material, extract or effluent is contacted with the inoculum to provide an initial concentration of at least $1 \times 10^7$ cells per ml.

4. A process according to claim 1, 2 or 3, characterized in that tobacco material is extracted with water to produce an aqueous tobacco extract having a nitrate-nitrogen content of from 10 ppm to 3000 ppm, and the extract is then contacted with the microorganisms.

5. A process according to claim 1, 2 or 3 characterized in that the tobacco material is suspended in water to form a slurry having a concentration of 5 to 40% solids by weight and the microorganisms are then added to the slurry.

6. A process according to claim 5, characterized in that slurry is formed having a concentration of 5—20% solids by weight.

7. A process according to claim 1 or 2 characterized in that an effluent stream having a nitrate-nitrogen content of at least 10 ppm is treated.

8. A process according to any of claims 1 to 7 characterized in that the denitrifying microorganism is *Paracoccus denitrificans.*

## Patentansprüche

1. Verfahren zur Reduktion von Nitrat-Stickstoff in Tabakmaterialien, -extrakten oder -verarbeitungsabwässern, in dem man das/den Tabakmaterial, -extrakt oder -abwasser der Wirkung von Mikroorganismen aussetzt, die in der Lage sind, Nitrate zu reduzieren, dadurch gekennzeichnet, dass man das Material, den Extrakt oder das Abwasser sterilisiert und es/ihn dann unter im wesentlichen anaeroben Bedingungen der Wirkung eines Mikroorganismus aussetzt, der in der Lage ist, Nitrat-Stickstoff durch dissimilatorische Denitrifizierung unter Bildung von elementarem Stickstoff als Endprodukt zu reduzieren, welcher als Gas entfernt wird.

2. Verfahren nach Anspruch 1, dadurch gekennzeichnet, dass das/der Tabakmaterial, -extrakt oder -abwasser während eines Zeitraums von 12 bis 72 Stunden, bei einer Temperatur von 20°C bis 40°C, einem pH-Wert innerhalb des ungefähren Bereichs von 6 bis 8 und einem gelösten Sauerstoffgehalt von nicht mehr als 3 TpM mit dem Mikroorganismus in Berührung gehalten wird.

3. Verfahren nach Anspruch 1 oder 2, dadurch gekennzeichnet, dass das/der Tabakmaterial, -extrakt oder -abwasser mit dem Impfstoff in Berührung gebracht wird, um eine anfängliche Konzentration von wenigstens $1 \times 10^7$ Zellen pro ml zur Verfügung zu stellen.

4. Verfahren nach den Ansprüchen 1, 2 oder 3, dadurch gekennzeichnet, dass das Tabakmaterial mit Wasser extrahiert wird, um einen wässrigen Tabakextrakt mit einem Nitrat-Stickstoff-Gehalt von 10 TpM bis 3000 TpM zu ergeben, und der Extrakt dann mit den Mikroorganismen in Berührung gebracht wird.

5. Verfahren nach den Ansprüchen 1, 2 oder 3, dadurch gekennzeichnet, dass das Tabakmaterial in Wasser suspendiert wird unter Bildung einer Aufschlämmung mit einer Konzentration von 5 bis 40 Gew. % Feststoffen, und die Mikroorganismen dann zu der Aufschlämmung hinzugefügt werden.

6. Verfahren nach Anspruch 5, dadurch gekennzeichnet, dass eine Aufschlämmung mit einer Konzentration von 5 bis 20 Gew. % Feststoffen gebildet wird.

7. Verfahren nach Anspruch 1 oder 2, dadurch gekennzeichnet, dass ein Abwasserstrom mit einem Nitrat-Stickstoff-Gehalt von wenigstens 10 TpM behandelt wird.

8. Verfahren nach einem der Ansprüche 1 bis 7, dadurch gekennzeichnet, dass der denitrifizierende Mikroorganismus Paracoccus denitrificans ist.

## Revendications

1. Procédé de réduction de l'azote sous forme de nitrate contenu dans les produits à base de tabac, les extraits de tabac ou les effluents du traitement du tabac consistant à soumettre le produit à base de tabac, l'extrait ou l'effluent à l'action de microorganismes capables de réduire les nitrates, caractérisé en ce qu'on stérilise le produit, l'extrait ou l'effluent, puis on le soumet, dans des conditions pratiquement anaérobies, à l'action d'un microorganisme capable de réduire l'azote sous forme de nitrate par dénitrification par désassimilation en fournissant de l'azote élémentaire comme produit final, qu'on élimine sous la forme d'un gaz.

2. Procédé suivant la revendication 1, caractérisé en ce que le produit à base de tabac, l'extrait ou l'effluent de tabac est maintenu en contact avec le microorganisme pendant un laps de temps de 12 à 72 heures, à une température de 20 à 40°C, un pH d'environ 6 à 8, et une teneur en oxygène dissous non supérieure à 3 ppm.

3. Procédé suivant la revendication 1 ou 2, caractérisé en ce que le produit à base de tabac, l'extrait ou l'effluent de tabac est mis en contact avec l'inoculum de façon à obtenir une concentration initiale d'au moins $1 \times 10^7$ cellules par ml.

4. Procédé suivant la revendication 1, 2 ou 3, caractérisé en ce qu'on extrait le produit à base de tabac à l'aide d'eau, de façon à obtenir un extrait de tabac aqueux ayant une teneur en azote sous forme de nitrate de 10 à 3000 ppm, puis on met l'extrait en contact avec les microorganismes.

5. Procédé suivant la revendication 1, 2 ou 3, caractérisé en ce qu'on met le produit à base de

tabac en suspension dans de l'eau, de façon à obtenir une suspension ayant une concentration en matières solides de 5 à 40% en poids, et on ajoute ensuite les microorganismes à la suspension.

6. Procédé suivant la revendication 5, caractérisé en ce qu'on prépare une suspension ayant une concentration en substances solides de 5 à 20% en poids.

7. Procédé suivant la revendication 1 ou 2, caractérisé en ce qu'on traite un courant d'effluent ayant une teneur en azote sous forme de nitrate d'au moins 10 ppm.

8. Procédé suivant 1'une quelconque des revendications 1 à 7, caractérisé en ce que l'organisme de dénitrification est *Paracoccus denitrificans*.